# FASCICULE DE BREVET EUROPEEN

(11) **EP 1 765 952 B1**
(45) Date de publication et mention de la délivrance du brevet: **07.04.2010**
(21) Numéro de dépôt: 05763403.2
(22) Date de dépôt: 06.07.2005
(51) Int. Cl.: C09J 175/14, C08G 18/67, C08G 18/68, C08G 18/58

(54) **SYSTEME ADHESIF POUR LE COLLAGE DIRECT D'UN POLYURETHANNE CUIT A DU CAOUTCHOUC CRU**
HAFTSYSTEM ZUR DIREKTEN BINDUNG EINES GEHÄRTETEN POLYURETHANS AN ROHKAUTSCHUK
ADHESIVE SYSTEM FOR THE DIRECT BONDING OF A CURED POLYURETHANE TO CRUDE RUBBER

(30) Priorité: 07.07.2004 FR 0407666
(43) Date de publication de la demande: 28.03.2007
(73) Titulaire: Michelin Recherche et Technique S.A., 1763 Granges-Paccot (CH)
(72) Inventeur: DELFINO, Antonio, CH-1772 Grolley (CH); CHENAUX, Philippe, CH-1727 Corpataux (CH); DEFOREL, Corinne, CH-1752 Villars sur Glâne (CH)
(74) Mandataire: Ribière, Joel
(86) Numéro de dépôt international: PCT/EP2005/007287
(87) Numéro de publication internationale: WO 2006/002998

(56) Documents cités:
- GB-A- 1 015 340
- US-A- 2 905 582
- US-A- 3 047 530
- US-A- 4 690 987
- US-A- 4 804 691

## Description

La présenté invention est relative aux systèmes adhésifs utilisables pour le collage, dans les matériaux composites, de polyuréthanne à du caoutchouc, plus précisément au collage de polyuréthanne cuit à des élastomères diéniques à l'état cru (non-vulcanisé).

La présente invention est également relative aux bandages montés sur roues et conçus pour être capables de porter une charge substantielle sans pression de gonflage, encore appelés bandages non pneumatiques.

La demande de brevet WO-A-00/37269 (ou US-B1-6 640 589) a proposé un bandage élastique non pneumatique caractérisé par une structure porteuse comportant essentiellement une pluralité d'éléments de support disposés sensiblement radialement, selon une symétrie cyclique tout autour de la circonférence du bandage. Lorsque ce bandage porte une charge, un certain nombre d'éléments de support présents dans l'aire de contact sont soumis à une flexion importante, ce qui leur permet de développer un effort de reprise d'une partie de la charge. Une structure d'interconnexion fait travailler ensemble les éléments de support, en reportant les sollicitations sur les éléments de support adjacents. La capacité de ce bandage à porter une certaine charge provient de la sollicitation en flexion des éléments de support présents dans l'aire de contact du bandage élastique non pneumatique, et elle provient également de la sollicitation également en flexion, des éléments de support en dehors de l'aire de contact du bandage élastique non pneumatique, via cette structure d'interconnexion.

Bien que le bandage élastique non pneumatique proposé ci-dessus s'avère parfaitement capable de supporter une charge importante en service normal, la demande de brevet EP-A-1 359 028 (ou US-A-2003/0226630) a proposé de perfectionner la structure porteuse ci-dessus, en lui conférant une endurance considérablement améliorée, tout en maintenant sa très grande aptitude à supporter la charge, grâce à l'introduction d'une pluralité d'articulations élastiques, chacune disposée au moins en partie entre la structure d'interconnexion en élastomère diénique et la première partie de chaque élément de support.

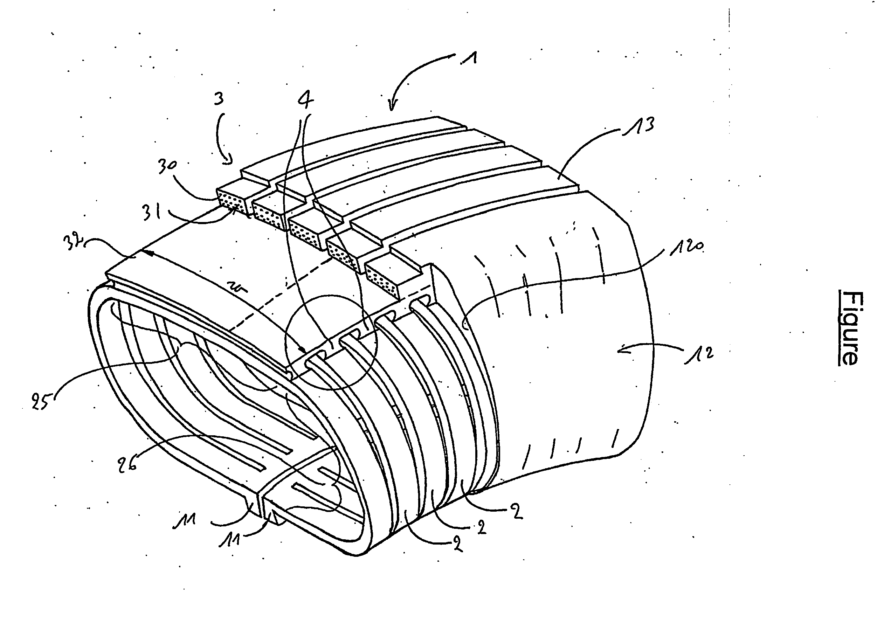

Dans ce bandage flexible amélioré, tel qu'illustré à la figure 1 de la demande EP-A-1 359 028 précitée comme à la figure unique de la présente demande, les éléments de support ou arceaux 2, comportant par exemple un empilage de lames en matière composite, flexibles, noyées dans une matrice de caoutchouc, portent la charge. Ils ne travaillent pas de façon complètement isolée les uns des autres, mais ils sont reliés entre eux par une structure d'interconnexion 3 surmontée d'une bande de roulement 13, toutes deux en élastomère diénique, avec interposition d'articulations élastiques 4 de façon à assurer un bon fonctionnement d'ensemble, en évitant des cisaillements trop intenses, et de façon à offrir une bonne uniformité, c'est à dire une relative constance des propriétés quelle que soit la position circonférentielle du bandage par rapport au sol.

Selon l'enseignement de cette demande EP-A-1 359 028, chaque articulation élastique 4 est elle-même préférentiellement formée d'une composition d'élastomère diénique telle que celles utilisées pour les flancs des pneumatiques (hystérèse suffisamment faible et résistance satisfaisante aux déchirures), ce qui permet aux articulations élastiques de fonctionner correctement dans leur rôle de transmission des efforts entre les éléments de support 2 et la structure d'interconnexion, tout en acceptant des déformations importantes et répétées. L'excellente compatibilité existant entre les élastomères diéniques essentiellement insaturés assure de manière connue une adhésion très robuste entre les différentes pièces.

Cette demande EP-A-1 359 028 précise qu'une autre matière susceptible de donner d'excellents résultats pour cette articulation élastique 4 est le polyuréthanne.

Le polyuréthanne, on le sait, présente de très nombreux avantages, parmi lesquels une excellente résistance à la traction, au déchirement, à l'abrasion et aux agents chimiques, et tout particulièrement une faible hystérèse.

Un inconvénient majeur du polyuréthanne réside toutefois dans la difficulté de faire coller correctement ce produit à une pièce en élastomère diénique, comme le nécessite par ailleurs la structure du bandage non pneumatique décrit ci-dessus.

Tout d'abord, on ne connaît pas à ce jour de méthode efficace pour coller du polyuréthanne à un élastomère diénique à l'état cru, non vulcanisé.

On dispose certes de colles polyuréthanne liquides spécifiques susceptibles de coller du polyuréthanne cuit (c'est-à-dire polymérisé) à des caoutchoucs diéniques à l'état cuit (vulcanisé), mais ceci nécessite de faire polymériser le polyuréthanne d'une part et de cuire le caoutchouc d'autre part, indépendamment, avant de les traiter ensemble pour collage (voir par exemple US 4 942 093).

Cette solution n'est pas satisfaisante, notamment dans le cas présent, en raison du grand nombre d'inconvénients qui en découlent, pour certains rédhibitoires d'un point de vue industriel et antinomiques de la recherche de cadences de fabrication élevées :
- il est tout d'abord nécessaire de préparer la bande de roulement 13 et la structure d'interconnexion 3 précédemment décrites, toutes deux en élastomère diénique cru, sur un noyau rigide, de manière séparée ;
- une étape intermédiaire de cuisson séparée de ces pièces en élastomère diénique, avant contact avec le polyuréthanne cuit, doit être ensuite opérée ;
- il faut ensuite pouvoir appliquer la colle polyuréthanne liquide entre deux surfaces cuites, de manière uniforme, selon une épaisseur contrôlée, tout en maîtrisant les problèmes de coulage parasite de ladite colle ;
- sans une préparation à la fois mécanique et chimique de la surface, tel qu'un brossage ou grattage des surfaces à coller suivi d'une attaque acide, il s'avère impossible de faire coller correctement le polyuréthanne cuit à l'élastomère diénique cuit ;
- enfin, le niveau d'adhésion obtenu à chaud, typiquement à une température de l'ordre de 90°C à 100°C, est connu comme étant insuffisant vis-à-vis des exigences propres à un bandage, qu'il soit du reste non pneumatique comme pneumatique, pour véhicule routier susceptible de rouler à vitesse élevée de façon soutenue.

Poursuivant ses recherches, la Demanderesse a. trouvé de manière inattendue un système adhésif qui permet de faire coller directement et efficacement un polyuréthanne cuit à du caoutchouc cru, en évitant ainsi, notamment, les étapes intermédiaires de préparation sur un noyau rigide puis de cuisson séparée de la partie supérieure du bandage non pneumatique décrite ci-dessus.

Grâce à ce système adhésif spécifique, la structure radiale constituée par les arceaux 2 peut faire office de noyau rigide sur lequel on vient déposer directement ladite partie supérieure du bandage (bande de roulement 13 et structure d'interconnexion à l'état de gomme crue.

Cette solution offre, après cuisson, une excellente adhésion entre le polyuréthanne et le caoutchouc diénique, non seulement à température ambiante mais aussi, ce qui est d'autant inattendu et remarquable pour l'homme du métier, à une température d'utilisation élevée.

En conséquence, selon un premier objet, l'invention concerne l'utilisation d'une composition adhésive comme primaire d'adhésion pour le collage d'un polyuréthanne cuit à une composition d'élastomère diénique à l'état cru, caractérisée en ce que ladite composition comporte au moins un composé polyisocyanate et une résine vinylester comportant des groupes fonctionnels réactifs vis-à-vis des groupes isocyanate dudit composé polyisocyanate, le nombre total de ces groupes isocyanate étant en excès par rapport au nombre total desdits groupes fonctionnels de la résine polyester ou vinylester.

Selon un autre objet, l'invention concerne également un polyuréthanne préadhérisé recouvert d'une composition adhésive ou primaire d'adhésion conforme à l'invention.

L'invention concerne également un procédé pour faire adhérer un polyuréthanne cuit à une composition d'élastomère diénique à l'état cru, comportant au moins les étapes suivantes :
- appliquer sur le polyuréthanne prépolymérisé, à titre de primaire d'adhésion, la composition adhésive précédemment définie ;
- polymériser le primaire d'adhésion et le polyuréthanne ainsi recouvert de son primaire ;
- déposer ensuite sur le polyuréthanne ainsi préadhérisé le secondaire d'adhésion précité ;
- mettre la composition d'élastomère diénique à l'état cru au contact du polyuréthanne ainsi encollé ;
- faire cuire l'ensemble.

L'invention concerne également en soi, avant comme après cuisson, un composite comportant au moins une première partie en polyuréthanne solidaire d'une seconde partie en caoutchouc diénique au moyen d'une interphase adhésive, caractérisée en ce que ladite interphase adhésive est à base d'au moins un composé polyisocyanate, une résine vinylester comportant des groupes fonctionnels réactifs vis-à-vis de groupes isocyanates dudit polyuréthanne, le nombre total de ces groupes isocyanate étant en éxcès par rapport au nombre total desdits groupes fonctionnels de la résine vinylester, et un secondaire d'adhésion pour élastomère diénique apte à se lier à la résine vinylester ou polyester du primaire d'adhésion.

L'invention concerne également l'utilisation dudit composite pour la fabrication d'un article en caoutchouc, ainsi que tout article en caoutchouc comportant un tel composite.

L'invention concerne en particulier l'utilisation d'un tel composite pour la fabrication ou le renforcement de tout système de liaison au sol de véhicules automobiles, tels que bandage non pneumatique, bandage pneumatique, appui interne de sécurité pour pneumatique, roue, ressort en caoutchouc, articulation élastomérique, autre élément de suspension et anti-vibratoire, ou encore de produits semi-finis en caoutchouc et polyuréthanne destinés à de tels systèmes de liaison au sol.

L'invention concerne également les systèmes de liaison au sol et les produits semi-finis en caoutchouc et polyuréthanne eux-mêmes, lorsqu'ils comportent un composite conforme à l'invention.

L'invention concerne tout particulièrement un bandage pneumatique ou non pneumatique, un tel bandage étant susceptible d'équiper tout type de véhicule à moteur, par exemple de type tourisme, deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent, ainsi que de la figure schématique relative à ces exemples qui représente une perspective partielle d'un bandage non pneumatique conforme à l'invention, avec un écorché permettant de voir ses éléments internes.

### I. DESCRIPTION DETAILLEE DE L'INVENTION

Pour faire adhérer notamment un polyuréthanne cuit à une composition d'élastomère diénique à l'état cru (non vulcanisé), la présente invention propose un système adhésif faisant appel à un adhésif primaire et un adhésif secondaire spécifiques, tous deux décrits en détail ci-après.

Sont décrits ensuite le procédé selon l'invention ainsi que l'application d'un tel procédé à la fabrication de pièces composites, notamment de pièces composites entrant dans la constitution de bandages flexibles non pneumatiques.

Dans la présente description, sauf indication expresse différente, tous les pourcentages (%) indiqués sont des % en poids.

### I-1. -Primaire d'adhésion

La composition adhésive conforme à l'invention est essentiellement à base d'un composé polyisocyanate et d'une résine vinylester insaturé, ladite résine comportant des groupes fonctionnels réactifs vis-à-vis des groupes isocyanates du composé polyisocyanate. Une caractéristique essentielle de cette composition adhésive, pour qu'elle puisse réagir avec la surface du polyuréthanne, est que le nombre total de groupes isocyanate du composé polyisocyanate soit en excès (stoechiométrique) par rapport au nombre total desdits groupes fonctionnels de ladite résine.

### A) Composé polyisocyanate :

On peut utiliser tout type de composé polyisocyanate, ce dernier étant toutefois choisi préférentiellement dans le groupe constitué par les diisocyanates, les triisocyanates et les mélanges de tels composés.

Plus préférentiellement_{;} on utilise des diisocyanates, par exemple le para-phénylène diisocyanate (PPDI), le tolidène diisocyanate (TODI), l'isophorone diisocyanate (IPDI), le 4,4'-méthylène bis (phénylisocyanate) (MDI), le toluène diisocyanate (TDI), le naphthalène-1,5-diisocyanate (NDI) et les produits équivalents.

Ce composé polyisocyanate est plus préférentiellement choisi dans le groupe constitué par le diphénylméthane diisocyanate (MDI), le toluène diisocyanate (TDI et les mélanges de ces composés. Le TDI, liquide à température ambiante, de réactivité bien adaptée, est particulièrement préféré.

### B) Résine vinylester du primaire :

La résine du type vinylester a pour caractéristique essentielle de comporter des groupes fonctionnels réactifs vis-à-vis des groupes isocyanates du composé polyisocyanate.

A titre d'exemples préférentiels de tels groupes fonctionnels réactifs, on citera ceux choisis dans le groupe constitué par les groupes hydroxyle (-OH), carboxyle (-COOH), thiol (-SH), les groupes aminés (primaires ou secondaires) NH, NH₂ et NHR, les groupes amides -CONH₂ et -CONHR, thioamides -CSNH₂ et -CSNHR, sulfoniques -SO₂OH, et les mélanges de tels groupes fonctionnels, le radical R de substitution représentant ici un radical hydrocarboné monovalent quelconque (ayant par exemple de 1 à 18 atomes de carbone). Plus préférentiellement, ces groupes fonctionnels réactifs sont des groupes hydroxyle.

Sans que cette définition soit limitative, la résine utilisée est de préférence une résine vinylester du type époxyde, encore appelée "époxyvinylester". Les résines époxyvinylester sont bien connues de l'homme du métier, elles ont été décrites dans de nombreux ouvrages, notamment dans les documents de brevet EP-A-1 074 369, US-A-6 329 475 ou WO-A-84/00170.

On utilise plus préférentiellement une résine époxyvinylester qui, au moins pour partie, est à base (c'est-à-dire greffée sur une structure du type) novolaque (encore appelée phénoplaste) et/ou bisphénolique, c'est-à-dire une résine à base novolaque, bisphénolique, ou novolaque et bisphénolique.

Une résine époxyvinylester à base novolaque (partie entre crochets de la formule 1 ci-dessous) répond par exemple de manière connue à la formule (n typiquement inférieur à 10, par exemple de 1 à 5) :

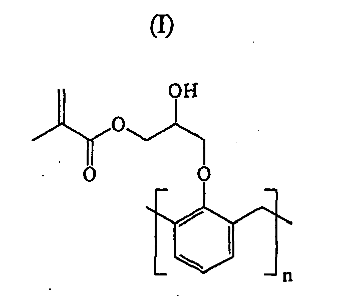

Une résine époxyvinylester à base bisphénolique A (partie entre crochets de la formule II ci-dessous) répond par exemple à la formule (le "A" rappelant que le produit est fabriqué à l'aide d'acétone) (n typiquement inférieur à 10, par exemple de 1 à 5):

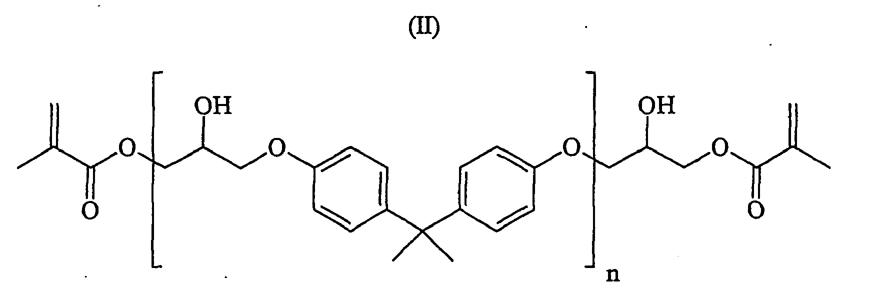

On notera que les groupes -OH de ces résines (résultant de manière connue de l'ouverture des fonctions époxy de départ) sont aptes à réagir avec les groupes isocyanates (-NCO) du composé polyisocyanate pour former des liaisons uréthane.

Une résine époxyvinylester de type novolaque et bisphénolique, notamment, a montré d'excellents résultats, à titre d'exemple la résine vinylester "ATLAC 590" de la société DSM (diluée avec environ 40% de styrène) ; de telles résines époxyvinylester sont disponibles chez d'autres fabricants tels que Dow, Reichhold, Cray Valley, UCB.

La composition adhésive ou primaire d'adhésion conforme à l'invention peut avantageusement comporter un certain nombre d'additifs destinés à améliorer ses propriétés d'usage.

Ainsi, pour adapter la viscosité de cette dernière aux conditions particulières de réalisation de l'invention, peut être par exemple ajusté le taux de solvant éventuel de la résine polyester ou vinylester, ou encore être utilisé un photo-initiateur. On préfère utiliser un solvant de la résine, selon un taux préférentiel compris entre 5 et 15% (% en poids total de résine et de son solvant associé).

On peut aussi avantageusement utiliser un agent flexibilisant, encore appelé "allongeur de chaîne", destiné à rendre plus flexible la composition une fois polymérisée, en particulier à augmenter de manière notable son allongement à la rupture. On utilise de préférence un élastomère diénique de bas poids moléculaire, par exemple un polybutadiène, plus préférentiellement fonctionnalisé vinylester ou polyester en bouts de chaîne, un tel élastomère ayant une masse moléculaire moyenne en poids (notée Mw) comprise plus préférentiellement entre 2000 et 4000 g/mol. Le rapport pondéral allongeur de chaîne sur résine à l'état sec est de préférence compris entre 0 et 1,5, plus préférentiellement compris entre 0,8 et 1,4.

Dans cette composition adhésive, le rapport pondéral composé polyisocyanate sur résine à l'état sec est de préférence compris entre 0,5 et 2,0, plus préférentiellement entre 1,0 et 1,8, un tel rapport étant calculé sur une base molaire de polyisocyanate TDI (masse molaire égale à environ 174 g ; 2 groupes -NCO par mole).

En d'autres termes, le rapport pondéral composé polyisocyanate sur résine à l'état sec est de préférence compris entre 0,5(M/174)(2/N) et 2,0(M/174)(2/N), plus préférentiellement entre 1,0(M/174)(2/N) et 1,8(M/174)(2/N), M étant la masse molaire et N le nombre de groupes (ou équivalents) NCO par mole du composé polyisocyanate. Ceci signifie simplement que dans le cas par exemple d'un autre diisocyanate qui aurait une masse molaire double de celle du TDI, ledit rapport pondéral serait alors de préférence compris entre 1,0 et 4,0, plus préférentiellement entre 2,0 et 3,6.

Plus généralement et de manière préférentielle, et ceci est en particulier vérifié pour les rapports pondéraux préférentiels énoncés ci-dessus, on a dans la formulation du primaire un excès notable, soit au moins deux fois plus de groupes isocyanate -NCO que de groupes fonctionnels (notamment hydroxyle -OH) de la résine polyester ou vinylester.

Cet excès notable garantit au primaire une excellente aptitude à adhérer au polyuréthane cuit. Pour cette raison, le rapport (en nombre) NCO/ groupes fonctionnels de la résine, plus particulièrement NCO/ -OH, est plus préférentiellement supérieur à 3, par exemple typiquement compris entre 3 et 8.

Pour la préparation du primaire d'adhésion, on mélange le composé polyisocyanate et la résine précédemment décrits, ainsi que les autres additifs éventuels, jusqu'à l'obtention d'une composition homogène. Généralement, quelques secondes à quelques minutes suffisent. Le délai d'utilisation du primaire d'adhésion est de préférence assez court, par exemple de quelques minutes à quelques dizaines de minutes lors d'un stockage à l'air libre et à 20°C, de plusieurs heures à plus basse température et sous faible humidité ambiante.

### 1-2. - Secondaire d'adhésion

Pour coller, à la composition d'élastomère diénique à l'état cru, le polyuréthanne recouvert du primaire d'adhésion puis cuit (polyuréthanne dit "préadhérisé"), on peut utiliser tout secondaire d'adhésion (ou ci-après "secondaire") pour élastomère diénique qui par définition est apte à se lier, par exemple par réaction chimique ou par l'intermédiaire d'un agent réticulant, d'une part à l'élastomère diénique, d'autre part à la résine vinylester ou polyester du primaire d'adhésion.

L'homme du métier saura, selon l'application particulière visée, sélectionner un tel secondaire, compatible avec le primaire, par exemple parmi les adhésifs connus polyvalents à base de résine phénolique tels que des colles RFL (de préférence pulvérisées finement sur le primaire d'adhésion), la gamme d'adhésifs secondaires polymériques "Chemosil" (e.g. "Chemosil 231G", "Chemosil 411", "Chemosil 425", etc.) commercialisés notamment par la société Henkel, adaptés au collage d'élastomères diéniques sur des substrats divers tels que notamment plastiques thermodurcissables, époxydes ou polyesters renforcés, polyuréthanes rigides.

Selon un mode de réalisation particulièrement préférentiel, on utilise un secondaire d'adhésion spécifique, ci-après également désigné par "colle diénique", qui a pour caractéristique de comporter d'une part un élastomère diénique et d'autre part un composé additionnel apte à se lier, par exemple par réaction chimique ou par l'intermédiaire d'un agent réticulant, à la résine vinylester ou polyester du primaire d'adhésion.

Ce composé additionnel consiste de préférence en une résine polyester ou vinylester. Dans un tel cas préférentiel, bien que la résine polyester ou vinylester de la colle ne nécessite pas, contrairement au cas du primaire, la présence de groupes fonctionnels réactifs vis-à-vis de groupes isocyanates, cette résine est elle-même, avantageusement et de préférence, une résine époxyvinylester, notamment une résine époxyvinylester à base novolaque et/ou bisphénolique telle qu'utilisée préférentiellement dans le primaire d'adhésion.

Préférentiellement, dans la colle diénique ci-dessus, l'élastomère diénique est un élastomère polyvinylpyridine-styrène-butadiène (en abrégé "p-VSBR").

Un élastomère p-VSBR consiste de manière connue en un polyvinylpyridine couplé à un élastomère diénique SBR (styrène-butadiène-rubber), répondant à la formule générale :

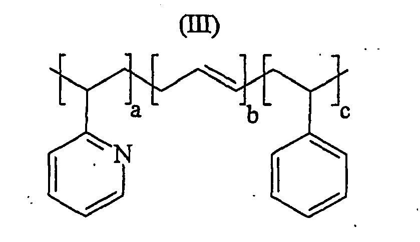

C'est un polymère ayant une masse moléculaire très élevée, de préférence de 500 000 à 1 000 000 g/mol. Il est généralement disponible commercialement sous forme d'un latex (émulsion en phase aqueuse basique diluée), par exemple à un taux voisin de 40% en poids de polymère.

L'homme du métier saura ajuster la formulation du secondaire à la lumière de la description et des exemples de réalisation qui suivent, en fonction des applications particulières visées.

Pour une efficacité optimale, on préfère que le taux de p-VSBR soit compris entre 10% et 40% et que celui de la résine soit compris entre 40% et 80% (% en poids de colle à l'état "sec" c'est-à-dire sans aucun solvant - exclus le solvant de la résine elle-même - ni eau). Plus préférentiellement, le taux de p-VSBR est compris entre 15% et 30% (par exemple entre 15% et 25%) et le taux de résine est compris entre 50% et 75% (par exemple entre 60% et 75%).

Cette colle diénique, réticulable au soufre grâce à la présence de l'élastomère diénique, en particulier p-VSBR, est apte à assurer le collage direct du polyuréthanne préadhérisé à une composition d'élastomère diénique à l'état cru.

La colle diénique décrite ci-dessus peut présenter une viscosité relativement élevée, ce qui peut rendra sa mise en oeuvre industrielle délicate. C'est pourquoi on en diminue de préférence la viscosité en ajoutant un solvant de la résine, plus préférentiellement du styrène, à un taux compris de préférence entre 0% et 40% (% en poids de colle finale, c'est-à-dire prête à l'emploi). Plus préférentiellement, le taux de solvant est ajusté entre 5% et 35%, afin de donner une fluidité adéquate à la colle ; en dessous de 5%; cette fluidité peut s'avérer insuffisante en fonction de l'application industrielle visée ; au-delà de 35% ou 40%, on s'expose à un risque de fluidité trop élevée (risque d'apparition de phénomènes parasites d'essorage).

Pour une application optimale de la colle diénique lors de la mise en oeuvre du procédé de l'invention décrit ultérieurement, on utilisera un taux de solvant compris plus préférentiellement entre 10% et 30%, encore plus préférentiellement compris entre 10% et 20%.

Contrairement aux compositions adhésives connues de l'homme du métier à base d'élastomère diénique, par exemple p-VSBR, la colle diénique ne nécessite pas la présence d'eau, c'est en cela qu'elle peut être qualifiée de "non-aqueuse" bien qu'elle puisse supporter sans dommage la présence d'eau en faible quantité, cette dernière étant de préférence présente à un taux inférieur à 5%, plus préférentiellement inférieur à 2% (% en poids de colle finale, prête à l'emploi).

Afin d'obtenir des temps de cuisson compatibles avec ceux du caoutchouc, le secondaire ci-dessus peut comporter avantageusement des accélérateurs et activateurs connus de polymérisation de la résine elle-même, tels que sels de cobalt II (par exemple le 2-éthylhexanoate de cobalt), diméthylaniline (DMA) ou diéthylaniline (DEA), N,N-diméthylacétoacétamide (DMAA) ou N,N-diéthylacétoacétamide (DEAA), ceci à des taux typiquement compris entre 0,3 et 3,0 pce (parties en poids pour Cent parties d'Elastomère).

Le secondaire peut comporte également tout ou partie des additifs habituellement utilisés dans des compositions adhésives destinées au collage de caoutchoucs diéniques, tels que des charges renforçantes comme le noir de carbone ou la silice, des agents anti-vieillissement, par exemple des antioxydants, des plastifiants, des agents de couplage, un système de réticulation à base soit de soufre, soit de donneurs de soufre et/ou de peroxyde, des accélérateurs, des activateurs ou retardateurs de vulcanisation, des accepteurs et donneurs de méthylène (tels que HMT ou H3M), des résines renforçantes tels que résorcinol, bismaléimide, des résines tackifiantes.

Le système de réticulation (vulcanisation) proprement dit est préférentiellement à base de soufre et d'un accélérateur primaire de vulcanisation, en particulier d'un accélérateur du type sulfénamide. A ce système de vulcanisation de base viennent s'ajouter le cas échéant divers accélérateurs secondaires ou activateurs de vulcanisation connus tels que oxyde de zinc, acide stéarique, etc. Le soufre est utilisé à un taux préférentiel compris entre 0,5 et 10 pce, plus préférentiellement compris entre 0,5 et 5,0 pce. L'accélérateur primaire de vulcanisation est utilisé à un taux préférentiel compris entre 0,5 et 10 pce, plus préférentiellement compris entre 0,5 et 5,0 pce.

La colle diénique précédemment décrite peut être préparée en partant par exemple d'un latex d'élastomère diénique, en particulier p-VSBR, en extrayant l'eau du latex puis en incorporant à l'élastomère la résine en solution dans du styrène.

L'étape d'extraction de l'eau du latex peut être conduite par tout moyen connu de l'homme du métier, notamment par l'action d'un agent coagulant tel qu'un sel, une base ou un acide, par exemple par coagulation dans un mélange acétone-eau en milieu acide (ex : HCl) puis neutralisation (à l'eau ou par action d'une base faible), suivie d'une étape de récupération du filtrat et séchage (évaporation du solvant).

L'extraction de l'eau du latex peut être également conduite par distillation azéotropique, auquel cas l'élastomère est mis en solution dans un solvant organique tel que le toluène et une étape supplémentaire peut être ajoutée afin de procéder à une extraction finale, au moins partielle, du (des) solvant(s) organique(s) utilisé(s).

C'est préférentiellement au cours de l'étape d'incorporation de l'élastomère à la résine que tous les additifs de la colle diénique, notamment, son système de réticulation, sont ajoutés. De préférence, ces additifs sont eux-mêmes présentés en solution ou en suspension (cas par exemple du noir de carbone et du ZnO qui sont insolubles) dans un liquide organique approprié, de préférence le même que celui utilisé, le cas échéant, pour l'étape de distillation azéotropique.

Dans la colle diénique précédemment décrite, le rapport pondéral résine/ élastomère diénique, en particulier résine/ p-VSBR, est de préférence choisi entre 1 et 8. Plus préférentiellement, il est compris entre 1,5 et 7,0, par exemple entre 2,0 et 6,0. Une valeur comprise dans un domaine de 3 à 5 (par exemple voisine ou égale à 4) s'est révélée optimale dans un grand nombre de cas.

### I-3. - Procédé de l'invention

Le procédé selon l'invention, pour faire adhérer un polyuréthanne cuit (polymérisé) à une composition d'élastomère diénique à l'état cru, comporte les étapes suivantes :
- appliquer sur le polyuréthanne solide le primaire d'adhésion précédemment défini ;
- polymériser le primaire d'adhésion et le polyuréthanne ainsi recouvert de son primaire d'adhésion ;
- déposer ensuite sur le polyuréthanne ainsi préadhérisé le secondaire d'adhésion précédemment défini ;
- mettre la composition d'élastomère diénique à l'état cru au contact du polyuréthanne ainsi encollé ;
- faire cuire l'ensemble, de préférence sous pression.

Pour la mise en oeuvre du procédé de l'invention, le polyuréthanne doit se trouver dans un état au moins partiellement polymérisé (c'est-à-dire "prépolymérisé"), c'est-à-dire suffisamment solide pour recevoir le primaire d'adhésion, qui plus est dans la forme qu'il aura essentiellement (aux éventuelles opérations de découple ultérieurs près) dans le composite final.

Le polyuréthanne peut être disponible tel quel à l'état solide ou prépolymérisé, ou bien préparé juste avant mise en oeuvre de la première étape du procédé ci-dessus, de manière bien connue de l'homme du métier à partir d'un prépolymère uréthanne liquide, du type coulable ou injectable, et d'un composé durcisseur (*"curing agent*)*,* par exemple un polyol ou un composé polyaminé. La durée de cette étape de prépolymérisation peut varier selon les conditions particulières adoptées, typiquement de quelques minutes à quelques heures (par exemple entre 30 min et 3 h) pour une température de préférence comprise entre 80°C et 120°C (par exemple d'environ 110°C), étant entendu que l'emploi d'un catalyseur de polymérisation (par exemple une amine tertiaire ou un acide gras en C₁₈) peut permettre de réduire la durée d'une telle étape à quelques minutes seulement.

A titre d'exemples de tels prépolymères uréthanne, on peut citer les produits Adiprene® (séries L) et Vibrathane® de la société Crompton, Baytec® de Bayer.

Les agents durcisseurs de prépolymère uréthanne sont bien connus. On citera par exemple, à titre de polyols, des diols tels que par exemple éthylène glycol, diéthylène glycol, triéthylène glycol, 1,3-butanediol, 1,4-butanediol, ou des triols tels que par exemple le glycérol ; à titre de composés aminés, on citera par exemple des composés diphénylméthanes tels que le 3,3'-dichloro-4,4'-diaminodiphénylméthane (en abrégé "MOCA"), le 2,2'-dichloro-3,3',5,5'-tetraéthyl-4,4'-diaminodiphénylinéthane (en abrégé "MCDEA"), des diamines toluènes tels que la 3,5-diméthylthio-2,4-toluène diamine, la 3,5-diéthyl-2,4-toluène diamine, des benzoates tels que le triméthylène glycol-di-p-aminobenzoate, le polytétraméthylène glycol-di-p-aminobenzoate.

Bien entendu, d'autres additifs tels que colorant, charge, dispersant, antioxydant, ou autre stabilisant, pourraient être ajoutés en même temps que le durcisseur.

On applique donc, au cours d'une première étape, le primaire d'adhésion sur le polyuréthanne au moins prépolymérisé, par tout moyen connu tel qu'une pulvérisation, passage dans un bain, ou par une application au pinceau ou à la spatule.

Cette étape d'application du primaire d'adhésion peut être avantageusement précédée d'une étape préalable de préparation, activation de la surface du polyuréthanne, notamment par une action mécanique (par exemple un brossage) voire chimique, à la condition toutefois que cette activation, notamment lorsqu'elle est de nature chimique, ne perturbe pas l'efficacité du système adhésif de l'invention. Une telle préparation de surface peut favoriser l'ancrage mécanique du primaire d'adhésion et éviter notamment une évaporation trop rapide du composé polyisocyanate à la surface du polyuréthanne.

L'étape qui suit de polymérisation du primaire d'adhésion et du polyuréthanne ainsi recouvert de son primaire, est de préférence conduite par traitement thermique dans un domaine de température compris plus préférentiellement entre 90°C et 120°C (par exemple entre 100 et 115°C) afin de ne pas dégrader les propriétés mécaniques du produit. Plus préférentiellement encore, cette cuisson est opérée sous pression, par exemple en autoclave sous une pression comprise entre 4 et 8 bars, afin d'éviter un bullage possible du polyisocyanate qui, s'il est liquide (cas du TDI], peut avoir tendance à s'évaporer.

On pense que c'est au cours de cette étape de polymérisation, dont la durée est typiquement comprise entre 10 et 20 h, que d'une part sont réalisés la réaction finale au sein du primaire d'adhésion entre les groupes fonctionnels réactifs de la résine polyester ou vinylester et les groupes isocyanate, ainsi que l'accrochage chimique entre les groupes fonctionnels présents à la surface du polyuréthanne et les groupes isocyanate libres (en excès) du primaire, que d'autre part le polyuréthanne subit sa post-cuisson ou polymérisation complète lui permettant d'atteindre ses propriétés, notamment mécaniques, nominales.

Le primaire ainsi déposé et cuit sur le polyuréthanne préadhérisé est très stable dans le temps et pourrait être stocké, de préférence à l'abri de pollutions diverses telles que poussières, avant utilisation du secondaire d'adhésion. Mais on préfère généralement mettre en oeuvre l'étape suivante immédiatement après.

Sur le polyuréthanne ainsi cuit et préadhérisé, on dépose ensuite le secondaire d'adhésion précédemment décrit, par tout moyen connu (par exemple pinceau, spatule, pulvérisation), puis ou recouvre le tout de la composition d'élastomère diénique à l'état cru.

L'étape ultime consiste alors à faire cuire l'ensemble, de préférence sous pression, afin de permettre la réticulation du secondaire et du primaire d'adhésion, ainsi que la vulcanisation complète du caoutchouc.

### I-4. - Composite de l'invention

L'invention s'applique à tout type de composite susceptible d'être obtenu par le procédé précédemment décrit, comportant au moins une première partie en polyuréthanne solidaire d'une seconde partie en composition de caoutchouc diénique via une interphase adhésive, ladite interphase adhésive étant à base :
- d'une part du composé polyisocyanate et de la résine polyester ou vinylester comportant les fonctions réactives vis-à-vis des groupes isocyanates dudit composé polyisocyanate, polyisocyanate et résine provenant du primaire d'adhésion ;
- d'autre part du secondaire d'adhésion pour élastomère diénique, apte à se lier à la résine vinylester ou polyester du primaire d'adhésion.

Ledit secondaire d'adhésion est de préférence un adhésif à base d'un élastomère diénique et d'un composé additionnel apte à se lier à la résine vinylester ou polyester du primaire d'adhésion. Plus préférentiellement, ledit élastomère diénique est un polyvinylpyridine-styrène-butadiène (en abrégé "p-VSBR").

Dans le composite de l'invention, de préférence, le composé du secondaire d'adhésion apte à se lier à la résine vinylester ou polyester du primaire, consiste lui-même en une résine vinylester ou polyester. L'emploi d'une résine identique dans le primaire et le secondaire, notamment d'une résine du type époxyvinylester, est notamment avantageux, l'interphase adhésive du composite étant dans ce cas simplement à base des trois constituants essentiels que sont le composé polyisocyanate, la résine polyester ou vinylester comportant des groupes fonctionnels réactifs vis-à-vis de groupes isocyanate dudit polyisocyanate, et enfin l'élastomère diénique, notamment p-VSBR.

De préférence, dans ce composite selon l'invention, l'épaisseur de l'interphase adhésive, après cuisson, est comprise entre 0,02 et 0,50 mm, plus préférentiellement entre 0,02 et 0,10 mm.

Par l'expression interphase adhésive "à base de", il faut bien entendu entendre ici une interphase comportant le mélange et/ou le produit de réaction *in situ* des différents constituants de base utilisés pour cette interphase, certains d'entre eux, notamment primaire et secondaire d'adhésion, étant destinés à réagir entre eux ou avec leur environnement chimique proche, au moins en partie, lors des différentes phases de fabrication des composites ou articles finis comportant de tels composites, en particulier au cours de l'étape de cuisson finale.

Par élastomère (ou indistinctement caoutchouc) "diénique", on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

Ladite composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

### 1-5. - Application à la fabrication de bandages pneumatiques ou non pneumatiques

L'invention concerne également tout bandage pour véhicule routier, qu'il soit du type pneumatique ou non pneumatique, dans lequel coopèrent ou sont associées au moins une partie de structure en élastomère diénique avec au moins une partie de structure en polyuréthanne.

L'invention s'applique particulièrement à un bandage pneumatique (i.e., conventionnel) dont au moins une partie de la structure, zone bourrelet, flanc ou sommet du pneumatique, comporte un élément en polyuréthanne, en particulier à haut module en extension, au contact d'un autre élément en élastomère diénique.

L'invention s'applique également particulièrement à un bandage non pneumatique tel que décrit par exemple dans la demande de brevet EP-A-1 359 028 précitée, ayant une structure portante flexible s'étendant circonférentiellement autour d'un axe de rotation, une bande de roulement à la périphérie radialement extérieure de la structure portante, et au moins une zone de fixation, radialement du côté de l'axe de rotation, pour l'immobilisation de ladite structure portante à un disque de roue, la structure portante comportant (référence faite à la figure annexée) :
- une pluralité d'éléments de support 2 s'étendant essentiellement transversalement, dont une première partie est disposée au moins en regard d'une partie de la bande de roulement 13, et dont une autre partie est disposée au-delà de la bande de roulement, lesdits éléments de support 2 étant juxtaposés circonférentiellement et répartis tout autour de la circonférence ;
- une structure d'interconnexion 3 en élastomère diénique, assurant une interconnexion circonférentiellement entre les éléments de support 2 ;
- une pluralité d'articulations élastiques 4 en polyuréthanne, chacune disposée au moins en partie entre la structure d'interconnexion 3 et la première partie de chaque élément de support ;
- ladite structure d'inter-connexion 3 en élastomère diénique étant reliée aux articulations élastiques 4 en polyuréthanne au moyen d'une interphase adhésive à base du composé polyisocyanate, de la résine polyester ou vinylester et de l'élastomère P-VSBR précédemment décrits.

La figure annexée illustre un mode de réalisation particulier d'un tel bandage dans lequel le profil du bandage délimite une cavité interne torique de section ovoïdale. Le bandage 1 comporte deux zones de fixation 11 séparables axialement, deux flancs 12 et une bande de roulement 13. La bande de roulement 13 comporte plusieurs nervures parallèles, mais cet aspect n'a bien entendu aucun caractère limitatif. Les flancs 12 sont arrondis et occupent la majeure partie de la hauteur radiale du bandage 1. La structure portante comporte des éléments de support 2 encore appelés arceaux radiaux. Ces éléments de support 2 sont adjacents circonférentiellement et s'étendent chacun sensiblement radialement d'une zone de fixation 11 à l'autre.

A titre d'exemple, les arceaux 2 peuvent comportent un empilage de lames en matière composite, flexibles, superposées avec interposition d'une couche d'élastomère diénique ou de polyuréthanne entre lesdites lames. Le faisceau de lames ainsi collées les unes sur les autres forme une poutre apte à être sollicitée en flexion Cet aspect de la constitution du lamifié n'est cependant pas limitatif. Pour plus de détail, on pourra se reporter à la demande EP-A-1 359 028 précitée et à sa figure 2.

La structure portante comporte aussi une structure d'interconnexion 3 entre les éléments de support 2, de préférence arrangée radialement entre la bande de roulement 13 et les éléments de support 2. La structure d'interconnexion 3 est capable de répartir une sollicitation radiale circonférentiellement entre plusieurs éléments de support 2, tout en autorisant des différences de déplacement entre éléments de support adjacents. A cette fin, la structure d'interconnexion 3 comporte de préférence un renfort orienté sensiblement circonférentiellement, par exemple un renfort monofilamentaire 30 noyé dans une matrice élastomérique 31, bobiné en plusieurs endroits pour ceinturer l'ensemble des éléments de support 2 en regard de la bande de roulement 13, elle-même étant de préférence en caoutchouc diénique. Les spires de renfort monofilamentaire 30 sont dans ce cas particulier arrangées radialement par-dessus une couche 32 d'une matière élastomérique. Le renfort monofilamentaire 30 est enroulé sensiblement circonférentiellement, c'est à dire selon un angle proche de 0° par rapport à un plan perpendiculaire à l'axe. Il peut s'agir d'un bobinage dudit renfort monofilamentaire 30 selon le nombre de tours voulu ou, ce qui est équivalent, il peut s'agir d'anneaux monofilamentaires en nombre voulu. Notons que l'on pourrait, en variante du renfort monofilamentaire 30, utiliser de nombreux câbles parmi ceux qui sont couramment utilisés comme renforcement à zéro degré disposé à l'intérieur de la bande de roulement des pneumatiques usuels. On pourrait aussi utiliser un renfort ayant la forme d'une lame ou un ruban par exemple en matière composite renforcée, plutôt qu'un renfort monofilamentaire. Là encore, la lame ou le ruban est bobiné selon le nombre de tours voulu ou utilisé sous la forme d'anneaux employés en nombre voulu.

Pour d'autres détails sur la constitution de ces éléments de support et de la structure d'interconnexion, le lecteur pourra se reporter utilement à la demande de brevet WO 00/37269 précitée.

On voit sur la figure que les éléments de support 2 et la structure d'interconnexion 3 sont reliées par des articulations élastiques 4. Chaque élément de support 2 est surmonté radialement d'une telle articulation élastique 4, qui assure la liaison mécanique entre les éléments de support 2 et la structure d'interconnexion 3, les efforts transmis des uns à l'autre passant par lesdites articulations élastiques 4. Dans un mode préféré de réalisation de l'invention, lesdits éléments de support 2 sont axialement continus en regard de la bande de roulement et au-delà, jusqu'aux zones de fixation 11. On voit que chaque élément de support 2 comporte une partie médiane 25 correspondant sensiblement à la largeur de la structure d'interconnexion 3. C'est de cette façon qu'est réalisée, dans l'exemple non limitatif illustrant l'invention, ladite première partie (de chaque élément de support) disposée au moins en regard d'une partie de la bande de roulement. La structure d'interconnexion 3 occupe sensiblement toute la largeur (w) de la bande de roulement 13. Chaque articulation élastique 4 permet de relier la partie médiane 25 des éléments de support 2 à la structure d'interconnexion 3. On voit aussi que chaque élément de support 2 comporte, de chaque côté du bandage, une partie latérale 26 s'étendant dans le flanc 12 et rejoignant la zone de fixation 11. C'est de cette façon qu'est réalisée, dans l'exemple non limitatif illustrant l'invention, ladite autre partie (de chaque élément de support) disposée au-delà de la bande de roulement, là où les éléments de support sont fléchis lorsque le bandage est chargé.

A titre de variante possible de réalisation telle que déjà décrite dans la demande EP-A-1 359 028 précitée, le bandage 1 peut comporter ou non une peau extérieure 120 lui donnant un aspect uniforme comme onze voit à la partie droite de la figure ; cette peau 120, non conçue pour transmettre des efforts ni entre éléments de support ni entre éléments de support et structure d'interconnexion, recouvre simplement l'ensemble des éléments de support 2, par l'extérieur de ceux-ci. Il pourrait également y avoir une matière entre les éléments de support 2, comblant partiellement ou complètement l'espace entre deux éléments de support 2 adjacents.

Dans le bandage pneumatique 1 de l'invention, tout ou partie des articulations élastiques 4, de préférence chacune d'entre elles, est en polyuréthanne et la liaison entre le polyuréthanne et le caoutchouc diénique de la structure d'interconnexion 3 est assurée grâce au système adhésif selon l'invention.

### II. EXEMPLES DE REALISATION

### II-1. Réparation du système adhésif

Pour la préparation du primaire d'adhésion, on mélange jusqu'à l'obtention d'une composition homogène (durée : quelques minutes) environ 70 g de TDI avec environ 50 g d'une résine époxyvinylester à base novolaque et/ou bisphénolique ("ATLAC 590") comportant environ 10% en poids de styrène résiduel en tant que solvant de la résine (% en poids total de résine et styrène).

Le rapport pondéral TDI sur résine à l'état sec est donc de l'ordre de 1,55. Le ratio en groupes fonctionnels NCO/ -OH est ici supérieur à 3 (en fait proche de 5, selon le degré de polymérisation estimé de la résine époxyvinylester particulière ici utilisée); en d'autres termes, le primaire d'adhésion contient environ cinq fois plus de groupes isocyanate que de groupes hydroxyle.

On ajoute au primaire d'adhésion 50 g environ de polybutadiène fonctionnalisé vinylester en bouts de chaîne, à titre d'allongeur de chaîne (produit "Hycar X-168" de la société Novéon ; Mw égale à 3000 g/mol environ), selon un rapport pondéral allongeur de chaîne sur résine à l'état sec qui est donc égal à 1,1 environ.

Pour la préparation du secondaire d'adhésion ou colle diénique, on part dans cet exemple d'un latex d'élastomère p-VSBR dont on extrait l'eau par coagulation, puis on incorpore audit élastomère une résine vinylester en solution dans du styrène, à raison d'un rapport pondéral (résine/élastomère) égal à environ 4.

Plus précisément, on mélange dans un réacteur 210 ml d'acétone et 415 ml d'HCl 1% (pH égal à environ 1 à 2). Sous agitation et à température ambiante, on ajoute goutte à goutte (durée environ 45 min), sous courant d'azote, un mélange de 35 ml d'eau et de 50 g de latex p-VSBR ("Pyratex 240" de PolymerLatex) se présentant sous la forme d'une émulsion de polymère dans l'eau (40% de polymère - soit 20 g de p-VSBR - pour 60% d'eau et d'agents stabilisants basiques à pH 10-12). Simultanément, pour maintenir le pH à une valeur constante de 1-2, on ajoute goutte à goutte 40 ml d'HCl (10%). Le latex coagule ainsi de manière fine et régulière durant l'ajout. On laisse alors reposer jusqu'à une séparation complète de phases, l'élastomère flottant en surface. On sépare alors le polymère de la phase aqueuse puis on le lave avec de l'eau en plusieurs fois, pour ramener lentement le pH vers 7. Un dernier lavage peut être réalisé par exemple avec un mélange eau/acétone. Après avoir laissé décanter, on peut traiter le polymère avec un appareil permettant de pulvériser le polymère en des particules très fines. Enfin, on filtre et on sèche le polymère pendant 12 heures, sous vide, à une température de 60°C.

Les 20 g de p-VSBR ainsi obtenus sont ajoutés à 125 g de résine époxyvinylester ("ATLAC 590" - 80 g de vinylester sec pour 45 g de styrène) et on laisse reposer pendant une nuit. Le polymère gonfle en absorbant la résine.

On ajoute ensuite le reste des composants (noir, agents de vulcanisation, etc.), selon la formulation détaillée indiquée dans le tableau 1 annexé (les quantités en pce sont des parties en poids pour 100 parties d'élastomère p-VSBR), directement dans un mélangeur externe (outil à cylindres), à température ambiante, et on mélange le tout jusqu'à l'obtention d'une colle homogène, de couleur noire. La colle diénique ainsi préparée contient avantageusement moins de 1 % d'eau (% en poids de composition finale, prête à l'emploi).

Afin d'augmenter la viscosité de la colle diénique mais aussi de diminuer la quantité de solvant dégagée lors de la cuisson ultérieure du composite sous presse, il est possible de sécher la résine vinylester sous un vide élevé avant de la mélanger avec l'élastomère, par exemple jusqu'à un taux de styrène résiduel compris entre 10% et 15%. Soulignons encore que, bien que cette colle diénique comporte une certaine quantité résiduelle de solvant, elle n'a pas les inconvénients habituels des colles à solvant car le styrène réagit totalement lors de la mise en oeuvre de la colle diénique en prenant part à la polymérisation de cette dernière ; il n'a donc pas à être évaporé.

### 11-2. Préparation des composites - Caractérisation

Pour la préparation d'un composite caoutchouc/ polyuréthanne conforme à l'invention, on met en oeuvre le procédé de l'invention selon les étapes précédemment décrites, en procédant plus précisément comme indiqué ci-après.

On utilise comme prépolymère uréthanne de départ le produit Adiprène® LF930A de la société Crompton, consistant en un prépolymère polyéther terminé-TDI. Ce dernier est coulé dans un moule de forme prédéterminée (imposée par la forme du composite visé) en présence de son agent durcisseur (MCDEA), et soumis à une prépolymérisation de 45 min à une température de 110°C, afin de le rendre solide sous cette forme prédéfinie (ici une simple bande de polyuréthanne présentant après découpage une largeur de 25 mm, longueur d'au - moins 150 mm et épaisseur d'environ 2 mm).

Après un brossage mécanique, on applique le primaire d'adhésion, au pinceau, sur la couche de polyuréthanne ainsi prépolymérisé, selon une couche d'épaisseur égale à environ 50 à 100 µm.

Le polyuréthanne et le primaire d'adhésion qui le recouvre sont alors polymérisés par cuisson pendant 24 heures à 110°C, en autoclave, sous une pression de 6 bars.

Sur le polyuréthanne ainsi cuit et préadhérisé, est appliqué ensuite le secondaire d'adhésion, à la spatule, selon une couche d'épaisseur égale à environ 0,5 mm.

On recouvre le tout avec une couche de composition de caoutchouc diénique à l'état cru (bande de mêmes dimensions que la première couche en polyuréthanne), dont la formulation correspond à une composition de caoutchouc connue à base de caoutchouc naturel et de noir de carbone, utilisable notamment comme gomme de calandrage d'armature de renforcement d'une carcasse de bandage pneumatique conventionnel ; deux formulations différentes (exprimées en pce) sont données à titre d'exemples dans le tableau 2.

L'ensemble est finalement cuit sous presse, par exemple à 165°C pendant 55 min, sous une pression de 20 bars permettant la fin de la polymérisation du secondaire d'adhésion sur le primaire et sur le caoutchouc, ainsi que la vulcanisation ou cuisson du caoutchouc.

Ces paramètres de cuisson ne sont qu'indicatifs, ceux-ci pouvant être modifiés (par exemple cuisson à 165°C pendant 15 à 30 min sous une pression de 20 bar) notamment grâce à l'emploi de quantités variables d'accélérateurs ou d'activateurs de polymérisation de la résine du secondaire d'adhésion.

Le composite ainsi obtenu est ensuite soumis à un test de pelage connu tel que décrit dans la norme internationale ISO 8510-1:1990(F), consistant à séparer par arrachement les deux parties respectives en polyuréthanne et en caoutchouc diénique, le test étant conduit à température ambiante (23°C) ainsi qu'à température élevée (90°C).

On observe alors des forces d'arrachage très élevées sur le composite conforme à l'invention ainsi préparé, non seulement à froid (forces pouvant atteindre 1000 à 1200 N de charge pour une largeur de 25 mm) mais encore à chaud à 90-100°C (plus de 700 N de charge pour cette même largeur de 25 mm), ce qui est d'autant plus inattendu et illustre immédiatement pour l'homme du métier l'excellente performance du système adhésif selon l'invention.

La perte de force d'arrachage entre 23°C et 90-100°C n'est ici que de 35% environ alors qu'elle est par exemple supérieure à 80% dans le document US 4 942 093 précité décrivant l'emploi d'une colle polyuréthane liquide pourtant déjà améliorée par rapport aux colles commerciales usuelles, pour le collage du polyuréthane et du caoutchouc cru.

Dans les deux cas, le composite de l'invention présente, lors du pelage, une rupture non pas dans l'interphase adhésive, mais dans la couche d'élastomère, ce qui illustre un niveau d'adhésion très élevé à froid comme à chaud.

La même opération conduite sans primaire d'adhésion montre que le polyuréthanne et le caoutchouc ne collent pas ensemble, à basse comme à haute température.

D'autres exemples de réalisation, conduits avec des secondaires d'adhésion différents (colle RFL pulvérisée sur le primaire d'adhésion ; adhésif "Chemosil 411" de Henkel déposé au pinceau sur le primaire d'adhésion) ont conduit aux mêmes excellents résultats.

En conclusion, a été trouvé un système adhésif nouveau particulièrement efficace qui permet de faire coller directement un polyuréthanne cuit à du caoutchouc cru, en évitant notamment tous les inconvénients antérieurs précités du collage de polyuréthanne cuit sur du caoutchouc lui-même cuit; notamment l'emploi de colles polyuréthanne liquides de performance insuffisante en termes d'adhésion à chaud.

Si la composition adhésive conforme à l'invention est particulièrement adaptée, à titre de primaire d'adhésion, pour le collage d'un polyuréthane cuit à du caoutchouc cru, son application industrielle potentielle est large et peut s'étendre à des produits, notamment polymères ou élastomères, autres que polyuréthane, dès lors que ces produits comportent les fonctionnalités susceptibles de réagir avec une telle composition adhésive.

**Tableau 1**

| | |
|---|---|
| noir de carbone (N683) | 50 |
| résine tackifiante | 1 |
| résine formophénolique | 10 |
| HMT | 3.3 |
| accélérateur de polymérisation (1) | 2 |
| activateur de polymérisation (2) | 0.5 |
| ZnO | 3 |
| acide stéarique | 1 |
| soufre | 2.2 |
| accélérateur de vulcanisation (3) | 0.9 |

| | |
|---|---|
| (1) 2-éthylhexanoate de cobalt II (accélérateur "NL-51 P" de Akzo Nobel); (2) N,N-diéthylacétoacétamide ("Promotor C" de Akzo Nobel) ; (3) N-dicyclohexyl-2-benzothiazol-sulfénamide ("Santocure CBS" de la société Flexsys). | |

**Tableau 2**

| | | |
|---|---|---|
| caoutchouc naturel | 100 | 55 |
| élastomère SBR | - | 15 |
| élastomère BR | - | 30 |
| noir de carbone (N326) | 66 | 50 |
| antioxydant (1) | 2.2 | 1.5 |
| huile d'extension | 2 | 10 |
| ZnO . | 7.5 | 5.0 |
| acide stéarique | 0.6 | 0.6 |
| soufre | 4.5 | 3.0 |
| accélérateur de vulcanisation (2) | 0.7 | 0.9 |

| | | |
|---|---|---|
| (1) N-(1,3-diméthylbutyl)-N'-phényl-p-phénylénediamine; ("Santoflex 6-PPD" de la société Flexsys) ; (2) N-dicyclohexyl-2-benzothiazol-sulfénamide ("Santocure CBS" de la société Flexsys). | | |

## Revendications

1. Utilisation comme primaire d'adhésion, pour le collage d'un polyuréthanne cuit à une composition) d'élastomère diénique à l'état cru, d'une composition adhésive, **caractérisée en ce que** ladite composition comporte :
- un composé polyisocyanate ;
- une résine vinylester comportant des groupes fonctionnels réactifs vis-à-vis des groupes isocyanate dudit polyisocyanate, le nombre total de ces groupes isocyanate étant en excès par rapport au nombre total desdits groupes fonctionnes de la résine vinylester.

2. Utilisation selon la revendication 1, le composé polyisocyanate étant choisi dans le groupe constitué par les diisocyanates, les triisocyanates et les mélanges de tels composés.

3. Utilisation selon la revendication 2, le composé polyisocyanate étant un diisocyanate.

4. Utilisation selon la revendication 3, le composé diisocyanate étant choisi dans le groupe constitué par le diphénylméthane diisocyanate (MDI), le toluène diisocyanate (TDI) et les mélanges de ces composés.

5. Utilisation selon la revendication 4, le composé diisocyanate étant le TDI.

6. Utilisation selon l'une quelconque des revendications 1 à 5, les groupes fonctionnels de la résine vinylester étant choisis parmi les groupes hydroxyle, carboxyle, thiol, les groupes aminés -NH, NH₂ et -NHR, amides -CONH₂ et -CONHR, thioamides -CSNH₂ et - CSNHR, sulfoniques -SO₂OH, et les mélanges de tels groupes fonctionnels (R radical hydrocarboné monovalent quelconque).

7. Utilisation selon la revendication. 6, les groupes fonctionnels de la résine vinylester étant des groupes hydroxyle.

8. Utilisation selon l'une quelconque des revendications 1 à 7, la résine vinylester étant une résine époxyvinylester.

9. Utilisation selon la revendication 8, la résine époxyvinylester étant une résine à base novolaque et/ou bisphénolique.

10. Utilisation selon l'une quelconque des revendications 1 à 9, ladite composition adhésive comportant en outre un solvant de la résine.

11. Utilisation selon la revendication 10, le solvant de la résine étant du styrène.

12. Utilisation selon la revendication 11, le taux de styrène dans la composition adhésive étant compris entre 5% et 15% (% en poids total de résine et de son solvant associé).

13. Utilisation selon l'une quelconque des revendications 1 à 12, dans laquelle il y a au moins deux fois plus de groupes isocyanate que de groupes fonctionnels de la résine vinylester.

14. Utilisation selon la revendication 13, les groupes fonctionnels de la résine étant des groupes hydroxyle.

15. Utilisation selon les revendications 13 ou 14, l'excès de groupes isocyanate par rapport aux groupes fonctionnels de la résine, étant supérieur à 3.

16. Utilisation selon l'une quelconque des revendications 1 à 15, le rapport pondéral polyisocyanate sur résine à l'état sec étant compris entre 0,5(M/174)(2/N) et 2,0(M/174)(2/N), M étant la masse molaire et N le nombre de groupes -NCO par mole du composé polyisocyanate.

17. Utilisation selon la revendication 16, le rapport pondéral polyisocyanate sur résine à l'état sec étant compris entre 1,0(M/174)(2/N) et 1,8(M/174)(2/N).

18. Utilisation selon l'une quelconque des revendications 1 à 17, comportant en outre, à titre d'allongeur de chaîne, un élastomère diénique ayant une masse moléculaire moyenne en poids (Mw) comprise entre 2000 et 4000 g/mol.

19. Utilisation selon la revendication 18, l'allongeur de chaîne étant un polybutadiène.

20. Utilisation selon la revendication 18 ou 19, l'allongeur de chaîne étant un élastomère diénique fonctionnalisé vinylester en bouts de chaîne.

21. Utilisation selon l'une quelconque des revendications 18 à 20, le rapport pondéral allongeur de chaîne sur résine à l'état sec étant compris entre 0 et 1,5, de préférence entre 0,8 et 1,4.

22. Polyuréthanne préadhérisé recouvert d'une composition adhésive telle que définie dans l'une quelconque des revendications 1 à 21.

23. Procédé pour faire adhérer un polyuréthanne cuit à une composition d'élastomère diénique à l'état cru, **caractérisé en ce qu'**il comporte les étapes suivantes:
- appliquer sur le polyuréthanne prépolymérisé, à titre de primaire d'adhésion, une composition adhésive telle que définie dans l'une quelconque des revendications 1 à 21 ;
- polymériser le primaire d'adhésion et le polyuréthanne ainsi recouvert de son primaire ;
- déposer ensuite sur lie polyuréthane ainsi préadhérisé un secondaire d'adhésion pour élastomère diénique apte à se lier à la résine vinylester du primaire d'adhésion ;
- mettre la composition d'élastomère diénique à l'état cru au contact du polyuréthanne ainsi encollé ;
- faire cuire l'ensemble, de préférence sous pression.

24. Procédé selon la revendication 23, le secondaire d'adhésion étant à base d'un élastomère diénique et d'un composé additionnel apte à se lier à la résine vinylester du primaire d'adhésion.

25. Procédé selon la revendication 24, l'élastomère diénique du secondaire d'adhésion étant un élastomère polyvinylpyridine-styrène-butadiène (en abrégé "p-VSSR").

26. Procédé selon la revendication 23 ou 24, le composé additionnel du secondaire d'adhésion apte à se lier à la résine vinylester du primaire d'adhésion, étant une résine époxyvinylester.

27. Procédé selon la revendication 26, la résine époxyvinylester du secondaire d'adhésion étant une résine à base novolaque et/ou bisphénolique.

28. Procédé selon l'une quelconque des revendications 23 à 27, l'étape d'application du primaire d'adhésion étant précédée d'une étape préalable d'activation mécanique et/ou chimique de la surface du polyuréthanne.

29. Procédé selon l'une quelconque des revendications 23 à 28, l'étape de polymérisation du primaire d'adhésion sur le polyuréthanne étant conduite à une température comprise entre 90°C et 120°C, de préférence sous pression.

30. Procédé selon la revendication 29, la durée de l'étape de polymérisation du primaire d'adhésion étant comprise entre 10 et 20 heures.

31. Procédé salon l'une quelconque des revendications 25 à 30, le taux de p-VS13R dans le secondaire d'adhésion étant compris entre 10% et 40% (% en poids de secondaire d'adhésion à l'état sec).

32. Procédé selon l'une quelconque des revendications 26 à 31, le taux de résine dans le secondaire d'adhésion étant compris entre 40% et 80% (% en poids de secondaire d'adhésion à l'état sec).

33. Procédé selon l'une quelconque des revendications 26 à 32, le secondaire d'adhésion comportant en outre, en tant que solvant de la résine, entre 0% et 40% de styrène (% en poids de secondaire d'adhésion prêt à l'emploi).

34. Procédé selon l'une quelconque des revendications 23 à 33, le secondaire d'adhésion comportant en outre un accélérateur et un activateur de polymérisation.

35. Procédé selon l'une quelconque des revendications 23 à 34, le secondaire d'adhésion comportant en outre un système de réticulation, de préférence à base de soufre et d'accélérateur sulfénamide.

36. Procédé selon l'une quelconque des revendications 23 à 35, le secondaire d'adhésion comportant en outre une charge renforçante, de préférence choisie dans le groupe constitué par le noir de carbone et la silice.

37. Composite comportant au moins une première partie en polyuréthanne solidaire d'une seconde partie en caoutchouc diénique au moyen d'une interphase adhésive, **caractérisée en ce que** ladite interphase adhésive est à base d'au moins un composé polyisocyanate, une résine vinylester comportant des groupes fonctionnels réactifs vis-à-vis de groupes isocyanates dudit polyuréthanne, le nombre total de ces groupes isocyanate étant en excès par rapport au nombre total desdits groupes fonctionnels de la résine vinylester, et un secondaire d'adhésion pour élastomère diénique apte à se lier à la résine vinylester.

38. Composite selon la revendication 37, le secondaire d'adhésion étant à base d'un élastomère diénique et d'un composé additionnel apte à se lier à la résine vinylester du primaire d'adhésion.

39. Composite selon la revendication 38, l'élastomère diénique du secondaire d'adhésion étant un élastomère polyvinylpyridine-styrène-butadiène (en abrégé "p-VSBR").

40. Composite selon les revendications 38 ou 39, le composé additionnel du secondaire d'adhésion apte à se lier à la résine vinylester du primaire d'adhésion, consistant en une résine vinylester.

41. Composite selon l'une quelconque des revendications 37 à 40, l'interphase adhésive étant à base d'au moins un composé polyisocyanate, une résine époxyvinylester et un élastomère p-VSBR.

42. Utilisation d'un composite selon l'une quelconque des revendications 37 à 41 pour la fabrication d'un article en caoutchouc.

43. Utilisation selon la revendication 42, pour la fabrication ou le renforcement d'un système de liaison au sol de véhicules automobiles,

44. Article en caoutchouc comportant un composite selon l'une quelconque des revendications 37 à 41.

45. Article selon la revendication 44, consistant en un système de liaison au sol de véhicules automobiles.

46. Article selon la revendication 45, consistant en un bandage pneumatique ou un bandages non pneumatique.

## Claims

1. Use as an adhesion primer, for bonding a polymerised polyurethane to an uncured diene elastomer composition, of an adhesive composition, **characterised in that** said adhesive composition comprise :
- a polyisocyanate compound ;
- a vinylester resin comprising functional groups which are reactive towards the isocyanate groups of said polyisocyanate compound, the total number of these isocyanate groups being in excess relative to the total number of said functional groups of the vinylester resin.

2. Use according to Claim 1, the polyisocyanate compound being selected within the group consisting of diisocyanates, triisocyanates and mixtures of such compounds.

3. Use according to Claim 2, the polyisocyanate compound being a diisocyanate.

4. Use according to Claim 3, the diisocyanate compound being selected within the group consisting of diphenylmethane diisocyanate (MDI), toluene diisocyanate (TDI) and mixtures of these compounds.

5. Use according to Claim 4, the diisocyanate compound being TDI.

6. Use according to any one of Claims 1 to 5, the functional groups of the vinylester resin being selected within hydroxyl groups, carboxyl groups, thiol groups, amine groups - NH, -NH₂ and -NHR, amide groups -CONH₂ and -CONHR, thioamide groups - CSNH₂ and -CSNHR, sulfonic groups -SO₂OH, and mixtures of such functional groups (R being any monovalent hydrocarbon radical).

7. Use according to Claim 6, the functional groups of the vinylester resin being hydroxyl groups.

8. Use according to any one of Claims 1 to 7, the vinylester resin being an epoxy vinylester resin.

9. Use according to Claim 8, the epoxy vinylester resin being a novolac- and/or bisphenol-based resin.

10. Use according to any one of Claims 1 to 9, furthermore comprising a solvent for the resin.

11. Use according to Claim 10, the solvent for the resin being styrene.

12. Use according to Claims 11, the styrene content in the adhesive composition being between 5% and 15% (% by total weight of the resin and its associated solvent).

13. Use according to any one of Claims 1 to 12, wherein there are at least twice as many isocyanate groups as functional groups of the vinylester resin.

14. Use according to Claim 13, the functional groups of the resin being hydroxyl groups.

15. Use according to Claim 13 or Claim 14, the excess of isocyanate groups relative to the functional groups of the resin being greater than 3.

16. Use according to any one of Claims 1 to 15, the weight ratio of polyisocyanate to resin when dry being between 0.5(M/1T4)(2/N) and 2.0(M/174)(2/N), M being the molar mass and N the number of NCO groups per mole of the polyisocyanate compound.

17. Use according to Claim 16, the weight ratio of polyisocyanate to resin when dry being between 1.0(M/174)(2/N) and 1.8(M/174)(2/N).

18. Use according to any one of Claims 1 to 17, furthermore comprising, as chain extender, a diene elastomer having a weight average molecular weight (Mw) of between 2000 and 4000 g/mol.

19. Use according to Claim 18, the chain extender being a polybutadiene.

20. Use according to Claim 18 or 19, the chain extender being a diene elastomer functionalised at the chain ends with vinyl ester or polyester.

21. Use according to any one of Claims 18 to 20, the weight ratio of chain extender to resin when dry being between 0 and 1.5, preferably between 0.8 and 1.4.

22. A pre-adherised polyurethane, covered with an adhesive composition as defined in any one of Claims 1 to 21.

23. A process for adhering a cured polyurethane to an uncured diene elastomer composition, **characterised in that** it comprises the following steps:
- applying an adhesive composition as defined in any one of Claims 1 to 21, as adhesion primer, onto the prepolymerised polyurethane;
- polymerising the adhesion primer and the polyurethane thus covered with its primer;
- then applying onto the thus pre-adherised polyurethane the secondary adhesion layer for diene elastomer capable of bonding to the vinylester resin of the adhesion primer;
- bringing the uncured diene elastomer composition into contact with the polyurethane thus adherised;
- curing the assembly, preferably under pressure.

24. A process according to Claim 23, the secondary adhesion layer being based on a diene elastomer and an additional compound capable of bonding to the vinylester resin or the adhesion primer.

25. A process according to Claim 24, the diene elastomer of the secondary adhesion layer being a polyvinylpyridine/styrene/butadiene elastomer (abbreviated to "p-VSBR").

26. A process according to Claim 23 or 24, the additional compound of the secondary adhesion layer capable of bonding to the vinylester resin of the adhesion primer being an epoxyvinyl ester resin.

27. A process according to Claim 26, the epoxyvinylester resin of the secondary adhesion layer being a novolac- and/or bisphenol-based resin.

28. A process according to any one of Claims 23 to 27, the step of applying the adhesion primer being preceded by a prior step of mechanical and/or chemical activation of the surface of the polyurethane.

29. A process according to any one of Claims 23 to 28, the polymerisation step of the adhesion primer on the polyurethane being performed at a temperature of between 90°C and 120°C, preferably under pressure.

30. A process according to Claim 29, the duration of the adhesion primer polymerisation step being between 10 and 20 hours.

31. A process according to any one of Claims 25 to 30, the amount of p-VSBR in the secondary adhesion layer being between 10% and 40% (% by weight of secondary adhesion layer when dry).

32. A process according to any one of Claims 26 to 31, the amount of resin in the secondary adhesion layer being between 40% and 80% (% by weight of secondary adhesion layer when dry).

33. A process according to any one of Claims 26 to 32, the secondary adhesion layer furthermore comprising, as solvent for the resin, between 0% and 40% of styrene (% by weight of the ready-to-use secondary adhesion layer).

34. A process according to any one of Claims 23 to 33, the secondary adhesion layer furthermore comprising a polymerisation accelerator and polymerisation activator.

35. A process according to any one of Claims 23 to 34, the secondary adhesion layer furthermore comprising a crosslinking system, preferably based on sulfur and sulfenamide accelerator.

36. A process according to any one of Claims 23 to 35, the secondary adhesion layer furthermore comprising a reinforcing filler, preferably selected within the group consisting of carbon black and silica.

37. A composite comprising at least a first polyurethane part integral with a second diene rubber part by means of an adhesive interphase, **characterised in that** said adhesive interphase is based on at least one polyisocyanate compound, a vinylester resin comprising functional groups which are reactive towards isocyanate groups of said polyurethane, the total number of these isocyanates groups being in excess relative to the total number of said functional groups of the vinylester resin, and a secondary adhesion layer for diene elastomer capable of bonding to the vinyl ester or polyester resin.

38. A composite according to Claim 37, the secondary adhesion layer being based on a. diene elastomer and an additional compound capable of bonding to the vinylester resin of the adhesion primer.

39. A composite according to Claim 38, the diene elastomer of the secondary adhesion layer being a polyvinylpyridine/styrene/butadiene elastomer (abbreviated to "p-VSSR").

40. A composite according to Claim 38 or 39, the additional compound of the secondary adhesion layer capable of bonding to the vinylester resin of the adhesion, primer consisting of a vinylester resin.

41. A composite according to any one of Claims 37 to 40, the adhesive interphase being based on at least one polyisocyanate compound, an epoxyvinylester resin and a p-VSBR elastomer.

42. Use of a composite according to any one of Claims 37 to 41 for the manufacture of a rubber article.

43. Use according to Claim 42, for the manufacture or the reinforcement of a motor vehicle ground contact system.

44. A rubber article comprising a composite according to any one of Claims 37 to 41.

45. An article according to Claim 44, consisting of a motor vehicle ground contact system.

46. An article according to Claim 45, consisting of a pneumatic tyre or a non-pneumatic tyre.

## Patentansprüche

1. Verwendung einer Klebstoffzusammensetzung als Primärhaftznittel zum Klebern eines gehärteten Polyurethans mit einer Dienelastomerzusammensetzung in rohem Zustand, **dadurch gekennzeichnet, daß** die Zusammensetzung:
- eine Polyisocyanatverbindung;
- ein vinylesterharz mit funktionellen Gruppen, die gegenüber den Isocyanatgruppen des Polyisocyanats reaktiv sind, wobei die Gesamtzahl dieser Isocyanatgruppen im Verhältnis zur Gesamtzahl der funktionellen Gruppen des Vinylesterharzes im Überschuß vorliegt;
umfaßt.

2. Verwendung nach Anspruch 1, wobei die Polyisocyanatverbindung aus der Gruppe bestehend aus Diisocyanaten, Triisocyanaten und Mischungen derartiger Verbindungen ausgewählt ist.

3. Verwendung nach Anspruch 2, wobei es sich bei dem Polyisocyanat um ein Diisocyanat handelt.

4. Verwendung nach Anspruch 3, wobei die Diisocyanatverbindung aus der Gruppe bestehend aus Diphenylmethandiisocyanat (MDI), Toluoldiisocyanat (TDI) und Mischungen dieser Verbindungen ausgewählt ist.

5. Verwendung nach Anspruch 4, wobei es sich bei der Düsocyanatverbindung um TDI handelt.

6. Verwendung nach einem der Ansprüche 1 bis 5, wobei die funktionellen Gruppen des Vinylesterharzes unter Hydroxylgruppen, Carboxylgruppen, Triolgruppen, Amingruppen -NH, -NH₂, und -NHR, Amiden -CONH₂ und -CONHR, Thioamiden -CSNH₂ und -CSNHR, Sulfonsäuregruppen -SO₂OH und Mischungen derartiger funktionelle Gruppen ausgewählt ist (wobei R für einen einwertigen Kohlenwasserstoffrest steht).

7. Verwendung nach Anspruch 6, wobei es sich bei den funktionellen Gruppen des Vinylesterharzes um Hydroxylgruppen handelt.

8. Verwendung nach einem der Ansprüche 1 bis 7, wobei es sich bei dem Vinylesterharz um ein Epoxyvinylesterharz handelt.

9. Verwendung nach Anspruch 8, wobei es sich bei dem Epoxyvinylester um ein Harz auf Novolak- und/oder Bisphenol-Basis handelt.

10. Verwendung nach einem der Ansprüche 1 bis 9, wobei die Klebstoffzusammensetzung ferner ein Lösungsmittel für das Harz umfaßt.

11. Verwendung nach Anspruch 10, wobei es sich bei dem Lösungsmittel für das Harz um Styrol handelt.

12. Verwendung nach Anspruch 11, wobei der Styrolgehalt in der Klebstoffzusammensetzung zwischen 5% und 15% (bezogen auf das Gesamtgewicht des Harzes und des damit assoziierten Lösungsmittels) liegt.

13. Verwendung nach einem der Ansprüche 1 bis 12, wobei mindestens zweimal so viele Isocyanatgruppen wie funktionelle Gruppen des vinylesterharzes vorliegen.

14. Verwendung nach Anspruch 13, wobei es sich bei den funktionellen Gruppen des Harzes um Hydroxylgruppen handelt.

15. Verwendung nach einem der Ansprüche 13 oder 14, wobei der Überschuß an Isocyanatgruppen im Verhältnis zu den funktionellen Gruppen des Harzes mehr als 3 beträgt.

16. Verwendung nach einem der Ansprüche 1 bis 15, wobei das Gewichtsverhältnis von Polyisocyanat zu Harz in trockenem Zustand zwischen D,5(M/174)(2/N) und 2,0 (M/174) (2/N), wobei M die Molmasse ist und N die Zahl der -NCO-Gruppen pro Mol der Polyisocyanatverbindung ist, liegt.

17. Verwendung nach Anspruch 16, wobei das Gewichtsverhältnis von Polyisocyanat zu Harz in trockenem Zustand zwischen 1,0(M/174)(2/N) und 1,8(M/174)(2/N) liegt.

18. Verwendung nach einem der Ansprüche 1 bis 17, ferner umfassend ein Dienelastomer mit einem zahlenmittlere Molekulargewicht zwischen 2000 und 4000 g/mol als Kettenverlängerungsmittel.

19. Verwendung nach Anspruch 18, wobei es sich bei dem Kettenverlängerungsmittel um ein Polybutadien handelt.

20. Verwerdung nach Anspruch 18 oder 19, wobei es sich bei dem Kettenverlängerungsmittel um ein an den Kettenenden vinylesterfunktionalisiertes Dienelastomer handelt.

21. Verwendung nach einem der Ansprüche 18 bis 20, wobei das Gewichtsverhältnis von Kettenverlängerungsmittel zu Harz in trockenem Zustand zwischen 0 und 1,5 und vorzugsweise zwischen 0,8 und 1,4 liegt.

22. Voradhärisierfies Polyurethan, das mit einer Klebstoffzusammensetzung gemäß einem der Ansprüche 1 bis 21 beschichtet ist.

23. Verfahren zum Verkleben eines gehärteten Polyurethans mit einer Dienelastomerzusanunensetzung im rohem Zustand, **dadurch gekennzeichnet, daß** man:
- auf das vorpolymerisierte Polyurethan als Primärhaftmittel eine Klebstoffzusammensetzung gemäß einem der Ansprüche 1 bis 21 aufbringt;
- das Primärhaftmittel und das so mit dem Primärhaftmittel beschichtete Polyurethan polymerisiert;
- dann auf dem so voradhärisierten Polyurethan ein Sekundärhaftmittel für Dienelastomer, das sich mit dem Vinylesterharz des Primärhaftmittel verbinden kann, abscheidet;
- die Dienelastomerzusammensetzung in rohem Zustand mit dem so mit Kleber versehenen Polyurethan in Kontakt bringt;
- das Ganze härtet, vorzugsweise unter Druck.

24. Verfahren nach Anspruch 23, wobei das Sekundärhaftmittel auf einem Dienelastomer und einer zusätzlichen Verbindung, die sich mit dem Vinylesterharz das Primärhaftmittels verbinden kann, basiert.

25. Verfahren nach Anspruch 24, wobei es sich bei dem Dienelastomer des Sekundärhaftmittels um ein Polyvinylpyridin-Styrol-Butadien-Elastomer (abgekürzt "p-VSSR") handelt.

26. Verfahren nach Anspruch 23 oder 24, wobei es sich bei der zusätzliche verbindung des Sekundärhaftmittels, die sich mit dem Vinylesterharz des Primärhaftmittels verbinden kann, um ein Epoxyvinylesterharz handelt.

27. Verfahren nach Anspruch 26, wobei es sich bei dem Epoxyvinylester des Sekundärhaftmittels um ein Harz auf Novolak- und/oder Bisphenol-Basis handelt.

28. Verfahren nach einem der Ansprüche 23 bis 27, wobei man vor dem Aufbringen des Primärhaftmittels die Oberfläche des Polyurethans mechanisch und/oder chemisch aktiviert.

29. Verfahren nach einem der Ansprüche 23 bis 28, bei dem man den Schritt der Polymerisation des Primärhaftmittels auf dem Polyurethan bei einer Temperatur zwischen 90°C und 120°C durchführt, vorzugsweise unter Druck.

30. Verfahren nach Anspruch 29, bei dem die Dauer des Schritts der Polymerisation des Primärhaftmittels zwischen 10 und 20 Stunden liegt.

31. Verfahren nach einem der Ansprüche 25 bis 30, wobei der p-VSBR-Gehalt im Sekundärhaftmittel zwischen 10% und 40% (bezogen auf das Gewicht des Sekuzadärhaftmittels in trockenem Zustand) liegt.

32. Verfahren nach einem der Ansprüche 26 bis 31, wobei der Harzgehalt im Sekundärhaftmittel zwischen 40% und 80% (bezogen auf das Gewicht des Sekundärhaftmittel; in trockenem Zustand) liegt.

33. Verfahren nach einem der Ansprüche 26 bis 32, wobei das Sekundärhaftmittel außerdem als Lösungsmittel für das Harz 0% bis 40% Styrol (bezogen auf das Gewicht des gebrauchsfertigen Sekundärhaftmittels) umfaßt.

34. Verfahren nach einem der Ansprüche 23 bis 33, wobei das Sekundärhaftmittel außerdem einen Polymerisationsbeschleuniger und -aktivator umfaßt.

35. Verfahren nach einem der Ansprüche 23 bis 34, wobei das Sekundärhaftmittel außerdem ein Vernetzungssystem, vorzugsweise auf Basis von Schwefel und Sulfenamid-Beschleuniger, umfaßt.

36. Verfahren nach einem der Ansprüche 23 bis 35, wobei das Sekundärhaftmi.ttel außerdem einen verstärkenden Füllstoff, der vorzugsweise aus der Gruppe bestehend aus Ruß und Siliciumdioxid ausgewählt ist, umfaßt.

37. Verbund mit mindestens einem ersten Teil aus Polyurethan, der mit Hilfe einer Klebstoffzwischenphase mit einem zweiten Teil aus Dienkautschuk fest verbunden ist, **dadurch gekennzeichnet, daß** die Klebstoff zwischenphase auf mindestens einer Polyisocyanatverbindung, einem Vinylesterharz mit funktionellen Gruppen, die gegenüber den Isocyanatgruppen des Polyurethans reaktiv sind, wobei die Gesamtzahl dieser Isocyanatgruppen im Verhältnis zur Gesamtzahl der funktionellen Gruppen des Vinylesterharzes im Überschuß vorliegt, und einem Sekundärhaftmittel für Dienelastomer, das sich mit dem Vinylesterharz verbinden kann, basiert.

38. Verbund nach Anspruch 37, wobei das Sekundärhaftmittel auf einem Dienelastomer und einer zusätzlichen Verbindung, die sich mit dem Vinylesterharz des Primärhaftmittels verbinden kann, basiert.

39. Verbund nach Anspruch 38, wobei es sich bei dem Dienelastomer des Sekundärhaftmittels um ein Polyvinylpyridin-Styrol-Butadien-Elastomer (abgekürzt "p-VSBR") handelt.

40. Verbund nach den Ansprüchen 38 oder 39, wobei die zusätzliche Verbindung des Sekundärhaftmittels, die sich mit dem Vinylesterharz des Primärhaftmittels verbinden kann, aus einem Vinylesterharz besteht.

41. Verbund nach einem der Ansprüche 37 bis 40, wobei die Klebstoffzwischenphase auf mindestens einer Polyisocyanatverbindung, einem Epoxyvinylesterharz und einem p-VSBR-Elastomer basiert.

42. Verwendung eines Verbunds nach einem der Ansprüche 37 bis 41 zur Herstellung eines Kautschukgegenstands.

43. Verwendung nach Anspruch 42 zur Herstellung oder Verstärkung eines Bodenverbindungssystems von Kraftfahrzeugen.

44. Kautschukgegenstand, umfassend einen Verbund nach einem der Ansprüche 37 bis 41.

45. Gegenstand nach Anspruch 44, bestehend aus einem Bodenverbindungssystem von Kraftfahrzeugen.

46. Gegenstand nach Anspruch 45, bestehend aus einem pneumatischen Reifen oder einem nicht-pneumatischen Reifen.
